# EUROPEAN PATENT APPLICATION

(11) **EP 4 379 622 A1**
(43) Date of publication of application: **05.06.2024**
(21) Application number: 22210107.3
(22) Date of filing: 29.11.2022
(51) Int. Cl.: G06Q 10/04

(54) **DETERMINING EFFICACY OF LOCATION SYSTEM ASSISTING IN ASSET RETRIEVAL**

(71) Applicant: Koninklijke Philips N.V., 5656 AG Eindhoven (NL)
(72) Inventor: STOYANOVA, Delyana, Eindhoven (NL); TOLHUIZEN, Ludovicus Marinus Gerardus Maria, Eindhoven (NL); FURNICA, Alexander Sebastian, 5656AG Eindhoven (NL); CHATTERJEA, Supriyo, 5656AG Eindhoven (NL)
(74) Representative: Philips Intellectual Property & Standards

(57) **Abstract**

A system and method are provided for determining an efficacy of a location system for assisting a user to retrieve an asset in a building, wherein the asset is localizable based on an asset component of the location system being in communication range of one or more building components of the location system, wherein the location system comprises a user interface for enabling the user to obtain an estimated location of the asset. The simulation may comprise accessing floorplan data indicative of relative locations of rooms and corridors in the building, accessing system data indicative of a type and a configuration of the location system, wherein the configuration includes at least the locations of the building components in the building, and simulating a use of the location system to locate one or more assets in the building, wherein the simulating comprises, for at least one simulated location of the asset and at least one simulated location of the user in the building and based on the locations of the building components in the building and the floorplan data, estimating a time spent or distance covered by the user to retrieve the asset.

## Description

### FIELD OF THE INVENTION

The invention relates to a processor system and computer-implemented method for determining an efficacy of a location system for assisting a user to retrieve an asset in a building. The invention further relates to a computer-readable medium comprising instructions for a computer program, the computer program comprising instructions to cause a processor system to perform the computer-implemented method.

### BACKGROUND OF THE INVENTION

It is known to use a location system to assist a user in retrieving assets in a building. Such location systems may typically function in real-time, and may therefore also be referred to as real-time location systems (RTLS). Location systems find uses in various application areas. One of such application areas is the healthcare domain, and in particular hospitals, in where healthcare professionals are often burdened by having to search for assets, such as medical equipment (e.g., patient monitors, respiratory equipment), facility assets (e.g., patient beds, wheelchairs), IT assets (e.g., laptops, tablet devices), etc. An example of a RTLS providing asset tracking in a hospital is CenTrak's active RFID hospital asset tracking system as described in the brochure retrievable from https://content.centrak.com/hubfs/RTLS%20Brochures/Asset_Management_06.18.20.pdf.

It would be desirable to quantify the efficacy of a location system for assisting a user to retrieve an asset in a building, such as the aforementioned hospital. Such quantification would not only allow the comparison of a location system against alternatives (e.g., no location system or an alternative location system), and thereby influence business decisions to adopt or not adopt a location system, but also would allow the configuration of a location system to be optimized. However, quantifying the efficacy of a location system is difficult, since users are generally unaware of how much time is spent searching for assets.

In the healthcare domain, it was conceived to manually quantify the efficacy of a location system by estimating the time spent searching for assets. One example involves shadowing hospital staff to collect information about the duration of searches. This approach, however, is labour-intensive, prone to human errors and can disturb the workflow of the hospital staff. A second example involves asking hospital staff to use buttons for indicating search events. For example, a nurse would be asked to press a button when a search starts and when it ends. A search time duration estimate can be created by analysing the timestamps of the button presses. However, with this approach, it is likely that the buttons are not used when hospital staff has more urgent priorities, which then results in wrong estimates of the search times. It was also conceived to automate the estimation of search times, for example by making hospital staff wear tracking systems which indicate their location during a search. However, this approach is infringing the staff's privacy.

It would therefore be desirable to be able to quantify the efficacy of a location system which addresses one or more of the aforementioned drawbacks.

### SUMMARY OF THE INVENTION

In a first aspect of the invention, a computer-implemented method is provided for determining an efficacy of a location system for assisting a user to retrieve an asset in a building, wherein the location system comprises an asset component which is provided with the asset and a plurality of building components which are provided at known locations in the building, wherein the asset is localizable based on the asset component being in communication range of one or more of the building components, wherein the location system comprises a user interface for enabling the user to obtain an estimated location of the asset, wherein the method comprises:
accessing floorplan data, wherein the floorplan data is indicative of relative locations of rooms and corridors in the building;
accessing system data, wherein the system data is indicative of a type and a configuration of the location system, wherein the configuration indicated by the system data includes at least the locations of the building components in the building;
simulating a use of the location system to locate one or more assets in the building, wherein the simulating comprises, for at least one simulated location of the asset and at least one simulated location of the user in the building and based on the locations of the building components in the building and the floorplan data, estimating a time spent or distance covered by the user to retrieve the asset.

In a further aspect of the invention, a transitory or non-transitory computer-readable medium is provided, the computer-readable medium comprising data representing a computer program comprising instructions for causing a processor system to perform a computer-implemented method as described in this specification.

In a further aspect of the invention, a processor system is provided for determining an efficacy of a location system for assisting a user to retrieve an asset in a building, wherein the location system comprises an asset component which is provided with the asset and a plurality of building components which are provided at known locations in the building, wherein the asset is localizable based on the asset component being in communication range of one or more of the building components, wherein the location system comprises a user interface for enabling the user to obtain an estimated location of the asset, wherein the processor system comprises:
an input interface for accessing:
floorplan data, wherein the floorplan data is indicative of relative locations of rooms and corridors in the building; and
system data, wherein the system data is indicative of a type and a configuration of the location system, wherein the configuration indicated by the system data includes at least the locations of the building components in the building;
a processing subsystem for simulating a use of the location system to locate one or more assets in the building, wherein the simulating comprises, for at least one simulated location of the asset and at least one simulated location of the user in the building and based on the locations of the building components in the building and the floorplan data, estimating a time spent or distance covered by the user to retrieve the asset.

The above measures involve determining an efficacy of a location system for assisting a user to retrieve an asset in a building. In accordance with these measures, the efficacy may be determined based on simulation to obtain an estimate of a time spent or distance covered by the user to retrieve an asset in the building using the location system. To enable such simulation, floorplan data may be accessed which represents a computer-readable version of a floorplan of at least part of the building. The floorplan data may be indicative of the relative locations of at least some rooms and corridors in the building. Accordingly, from the floorplan data, it may be determined what the approximate distance or walking time is between respective rooms. In addition, system data may be accessed which may characterize the location system. The location system may comprise components which are installed in the building, and which are elsewhere also referred to as 'building components'. These may for example include Wi-Fi access points for a location system based on Wi-Fi, and infrared detectors for a location system based on infrared. The location of such building components in the building may be known and may be included in by the system data, in that the system data may for example indicate in which room a particular building component is installed. In addition, the system data may indicate which type of location system is used, which may refer to the general type of technology used (e.g., Wi-Fi, Bluetooth LE, Li-Fi, infrared, etc) but which may also further characterize the location system (e.g., for Wi-Fi, the range of respective access points, which may for example be indicated by the frequency on which they operate, e.g., 2.4 GHz, 5 GHz or 6 GHz).

Based on the floorplan data and the system data, a use of the location system to locate one or more assets in the building may be simulated. Namely, in the simulation, an asset may be placed in the building, typically in a specific room. Such an asset may in the following also be referred to as an 'simulated' or 'virtual' asset, with both terms being used interchangeably throughout this specification. In addition, in the simulation, a user may be placed in the building, typically in another room than the room containing the asset. The simulation may then simulate the user retrieving the asset in the building to simulate a real-life search for the asset using the location system. In the simulation, the user may have access to the location system and may thus obtain an estimated location of the asset from the location system. In some embodiments, the simulation may further involve simulating search behaviour of the user. This simulated search behaviour may, as in real-life, be dependent on the type of location system, and in particular on its accuracy. For example, if the location system provides a room-accurate estimate of the location of the asset, the user may proceed directly to the room indicated by the location system, in which case the search behaviour may be simply to proceed to the location given by the location system. However, if the location system provides an estimate of the location of the asset which includes several rooms, the user may be simulated to proceed sequentially through the rooms. In general, such search behaviour may be simulated using a model which expresses a degree of expectancy of the user of finding the asset in a respective room.

As a result of the simulation, an estimate may be obtained of the time spent and/or distance covered by the user to retrieve the asset. Since this estimate may directly depend on the initial position of the user and the placement of the asset, the simulation may in some embodiments be performed several times, e.g., for a number of randomly chosen locations of the user and the asset, to obtain a number of estimates which may be averaged, summed or in any other way converted into a metric quantifying the location's system efficacy in assisting the user to retrieve an asset. In other embodiments, however, a single time or distance estimate may suffice as quantification of the location system's efficacy.

Advantageously, by way of the above measures, it is not needed to question, shadow or in any other way involve actual users, such as hospital staff, to obtain such estimates. The users are thereby not disturbed in their work life. In addition, such simulation does not infringe on the user's privacy, nor does it suffer from reporting errors which otherwise may occur if the estimate depends on reporting by users. Simulation may also allow the efficacy to be determined for a building which does not yet exist, or which is not yet in its intended use, or for a location system which is not yet installed. An advantage of being able to determine the efficacy of a location system by means of simulation is that one may easily determine whether a location system is worthwhile, e.g., in terms of saved time, or if several location systems are available, which one of the location systems obtains the best compromise between performance (e.g., saved time) and cost (e.g., technical, or financial).

Optionally, the location system is configured to, during use, indicate a room which has a probability of containing the asset to the user, and wherein the simulating of the use of the location system further comprises, if the room indicated by the location system in the simulation does not contain the asset, simulating a search behaviour of the user to find the asset in a neighbourhood of said indicated room, wherein the simulating of the search behaviour is based on a model which expresses a degree of expectancy of the user of finding the asset in a respective room of the building. A location system may estimate that a particular room is probable, and perhaps even likely, to contain the asset. As the estimate may still suffer from some uncertainty, autonomous search behaviour of the user may be simulated, which may generally involve modelling a degree of expectancy of the user of finding the asset in a respective room of the building. For example, the user may be modelled to have a high expectancy of finding the asset in the room indicated by the location system, but may also have a high expectancy of finding the asset in a storage room. By modelling such search behaviour, the estimates provided by the simulation may be more realistic, for example by modelling that a user may visit a nearby storage room first before proceeding to the room indicated by the location system if the storage room is on the way.

Optionally, the location system is configured to, during use, if several rooms have a probability of containing the asset, indicate the rooms to the user, and wherein the simulating of the use of the location system further comprises simulating an order in which the user visits the rooms to find the asset. Some types of location systems may only provide a coarse estimate of an asset's location, for example an estimate which includes several rooms. In such a case, a real-life user may visit the rooms in a particular order, for example based on the distance of a respective room to the user. By modelling such search behaviour of a real-life user, the estimates provided by the simulation may be more realistic.

Optionally, the computer-implemented method and processor system are further arranged for accessing further system data of a further location system which is of a different type than the location system, and wherein the method further comprises simulating the use of the further location system to locate the one or more assets in the building, and outputting efficacy data enabling a comparison between the efficacy of the location system and the efficacy of the further location system for assisting the user in locating the one or more assets in the building. In the same or similar manner as the time and/or distance estimate(s) are obtained for a first location system, time and/or distance estimate(s) may be obtained for a second location system which is different, e.g., in terms of technology, from the first location system. This enables a comparison between both location systems, e.g., to determine whether replacement of an installed location system by another is worthwhile (e.g., in terms of performance, potentially also weighted against financial and/or technical cost) or if no location system is yet installed, which type of location system is best (again in terms of performance, but potentially also weighted against financial and/or technical cost).

Optionally, the location system and the further location system are based on different communication techniques selected from a group of: Wi-Fi, Bluetooth LE, Li-Fi, and infrared. Different types of location systems may use different communication techniques to estimate the location of assets. For example, it is known to provide location systems which are based on Wi-Fi (in which case as Wi-Fi access points may be used as building components), Bluetooth LE (in which case Bluetooth LE beacons may be used as building components), Li-Fi (in which case Li-Fi receivers or senders may be used as building components) or infrared (in which case infrared receivers or senders may be used as building components). It is noted that the asset component may be a corresponding type of component, e.g., a Wi-Fi client, a Bluetooth client, a Li-Fi receiver (e.g., if a Li-Fi transmitter is used as building component) or a Li-Fi transmitter, or an infrared receiver (e.g., if an infrared transmitter is used as building component) or an infrared transmitter. In this respect, it is noted that other types of location systems may be used and simulated as well.

Optionally, the computer-implemented method and processor system are further arranged for simulating the efficacy of the user in locating one or more assets in the building without the use of the location system, comprising simulating a search behaviour of the user based on a model which expresses a degree of expectancy of the user of finding the asset in a respective room of the building. The search for an asset may also be simulated for a user who retrieves assets without using a location system, for example because such a location system is not present in the building. The results from this simulation may serve as a so-called baseline for the simulations involving a location system, in that they may allow a comparison between a building with and without a location system. Such comparisons may for example provide feedback on whether installation of a location system is worthwhile (e.g., in terms of performance, potentially also weighted against cost).

Optionally, the model expresses the degree of expectancy of the user of finding the asset in a respective room based on a type of room. The type of room may in real-life play a role in the user's expectancy of finding the asset in a particular room. Namely, some types of rooms may be more likely to contain assets than others. By modelling such expectancies of a user, the estimates provided by the simulation may be more realistic.

Optionally, the type of room is indicative of whether or not a respective room is designated as storage for assets, and wherein the model expresses a higher expectancy of the user to find the asset in a room which is designated as storage for assets than a room which is not designated as storage for assets. Storage rooms are typically used to store assets, and thus, in real-life, a user may have a higher expectancy of finding an asset in a storage room than in another type of room, such as, in a hospital, a patient room. By modelling such expectancies by the user, which in turn may be based on real-life probabilities, the estimates provided by the simulation may be more realistic.

Optionally, the floorplan data comprises a data structure representing a labelled graph, wherein nodes of the graph represent rooms or corridors of the building and the nodes are labelled with respective locations of the rooms or corridors, and/or edges between respective pairs of nodes are labelled with distances or walking times between the rooms or corridors represented by the respective pairs of nodes. To estimate the time spent and/or distance covered during a search for an asset, it may be of relevance to know the relative distances or walking times between the respective rooms and corridors. This may be efficiently modelled by a labelled graph as defined above. Advantageously, a graph can be easily parsed by computer and is thus well-suited for use in the simulation.

Optionally, the computer-implemented method and processor system are further arranged for estimating a time spent in a respective room in a search of the user to retrieve the asset. In addition to estimating the overall time spent and/or distance covered when searching for an asset, also the time spent in respective rooms may be simulated and output. This may be used to further quantify the efficacy of a location system.

In a further aspect of the invention, a method is provided which comprises executing the computer-implemented method to determine the efficacy of the location system, thereby obtaining an output of the simulation, wherein the method further comprises adjusting a real-life configuration of the location system based on the output of the simulation. The output of the simulation, being for example a metric quantifying the efficacy of the location system, may be used to adjust the configuration of the actual location system which was simulated to improve the performance of the location system. Optionally, the adjusting of the real-life configuration of the location system comprises at least one of: adjusting a location of one or more of the building components, and adjusting a density of the building components in the building. For example, based on the simulation, it may be determined that a location of one or more of the building components (e.g., Wi-Fi access points) should be adjusted, or that the density of building components in the building should be increased or can be decreased. This way, the performance of the location system may be improved based on the simulation output.

Optionally, the method further comprises, before adjusting the real-life configuration of the location system:
simulating an adjusted configuration of the location system;
comparing the efficacy of the location system with and without the adjusted configuration; and
adjusting the real-life configuration of the location system based on a result of said comparison.

The adjusted configuration of the location system may be simulated before carrying out the adjustment on the actual location system. This way, it may be verified that the adjustment results in an improved performance, or if the adjustment is associated with a cost-reduction, that the performance does not degrade to an unacceptable degree.

In a further aspect of the invention, a method is provided which comprises executing the computer-implemented method to determine the efficacy of the location system, thereby obtaining an output of the simulation, wherein the method further comprises:
executing the computer-implemented method to simulate use of a further location system or to simulate a user locating one or more assets in the building without the use of a location system;
comparing the efficacy of the location system to the efficacy of the further location system or the efficacy of the user when not using a location system; and
selecting and installing one of the location system or the further location system in the real-life building based on a result of said comparison.

The further location system may be of a different type than the earlier-mentioned location system. For example, the type of localization technology may differ. The output of the simulation, being for example a metric quantifying the efficacy of the location system, may be used to select the further location system, for example if the efficacy of the location system was deemed to be insufficient. In a specific example, the location system, which may already be installed in the real-life building, may be compared against another location system which is not yet installed in the building. By way of the simulation, it may be determined in advance if the other ('further') location system is more effective in assisting a user with the search for assets. The further location system may then be installed in the building depending on a result of the comparison, for example if the further location system exceeds the efficacy of the currently installed location system by a sufficient margin. In some examples, a location system may also be compared against a baseline, namely the search for assets without the use of a location system. Also in these examples, it may be determined in advance if the location system is sufficiently effective in assisting a user with the search for assets, and if so, the location system may be installed in the building.

It will be appreciated by those skilled in the art that two or more of the above-mentioned embodiments, implementations, and/or optional aspects of the invention may be combined in any way deemed useful.

Modifications and variations of the processor system, the computer-implemented method and/or the computer program product, which correspond to the described modifications and variations of another one of said entities, can be carried out by a person skilled in the art on the basis of the present description.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows a processor system for determining an efficacy of a location system for assisting a user to retrieve an asset in a building;
Fig. 2 shows a floorplan of a part of a building, being a hospital;
Fig. 3 shows a graph which is overlaid over the floorplan and represents the relative locations of rooms and corridors in the part of the building;
Fig. 4 shows a simulated search path of a user when starting in a source room and searching for an asset which is located in a target room, wherein the search path is simulated for a baseline scenario in which a location system is not used or unavailable;
Fig. 5 shows a simulated search path for the user when making use of a location system which is based on triangulation of Wi-Fi access points;
Fig. 6 shows a simulated search path for the user when making use of a location system which is based on infrared detectors installed in each room;
Fig. 7 shows a computer-implemented method for determining an efficacy of a location system for assisting a user to retrieve an asset in a building; and
Fig. 8 shows a non-transitory computer-readable medium comprising data.

It should be noted that the figures are purely diagrammatic and not drawn to scale. In the figures, elements which correspond to elements already described may have the same reference numerals.

### List of reference numbers

The following list of reference numbers is provided for facilitating the interpretation of the drawings and shall not be construed as limiting the claims.
- 20: data storage
- 40: floorplan data
- 42: system data
- 60: display
- 62: display data
- 80: user input device
- 82: user input data

- 100: processor system for simulating location system
- 120: data storage interface
- 140: processing subsystem
- 142-146: data communication
- 160: memory
- 180: user interface subsystem
- 182: display output interface
- 184: user input interface

- 200: floorplan showing rooms and corridor in building
- 210: room
- 212: source room representing initial location user
- 214: target room containing asset
- 216-218: storage room
- 220: corridor
- 230: labelled graph defining relative locations of rooms and corridor
- 240: simulated search path (baseline)
- 242: simulated search path (Wi-Fi)
- 244: simulated search path (infrared)
- 250: estimated location of asset (Wi-Fi)
- 252: estimated location of asset (infrared)

- 300: method for simulating location system
- 310: accessing floorplan data
- 320: accessing system data
- 330: simulating location system

- 400: non-transitory computer-readable medium
- 410: data representing computer program

### DETAILED DESCRIPTION OF EMBODIMENTS

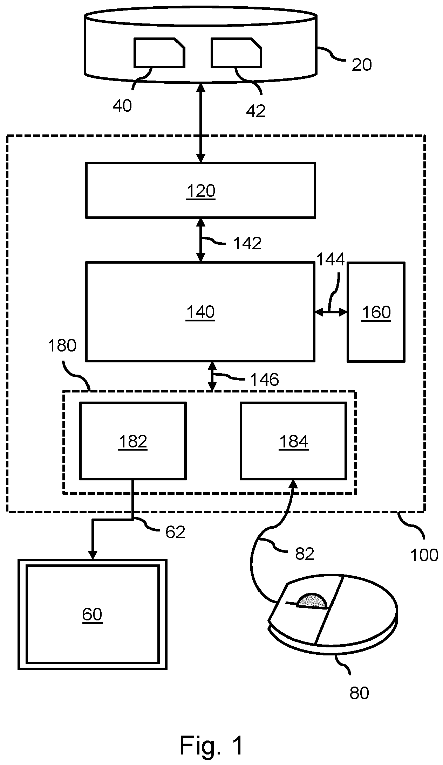

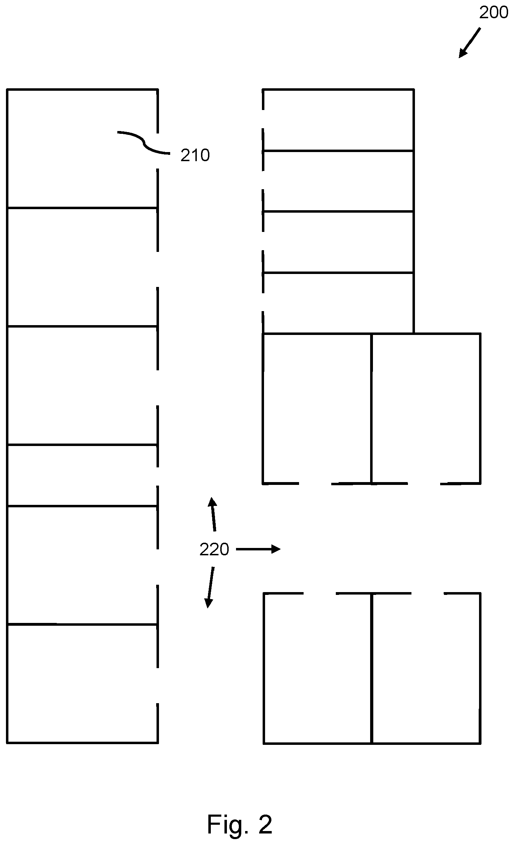

**Fig. 1** shows a processor system 100 for determining an efficacy of a location system in terms of its ability to assist a user to retrieve an asset in a building. As will be further explained with reference to Fig. 2 et seq., the location system itself (not shown in Fig. 1) may comprise an asset component which is provided with the asset and a plurality of building components which are provided at known locations in the building. The asset may be localizable within the building based on the asset component being in communication range of one or more of the building components, and the location system may further comprise a user interface for enabling the user to obtain an estimated location of the asset.

With continued reference to Fig. 1, the processor system 100 may comprise a data storage interface 120 to a data storage 20. The data storage 20 may serve as short term and/or long-term data storage. For example, the data storage 20 may store floorplan data 40 and system data 42 as described elsewhere in this specification. In the example of Fig. 1, the data storage interface 120 is shown to be connected to an external data storage 20. Alternatively, the data storage 20 may be an internal data storage of the processor system 100. The data storage interface 120 may for example be a hard disk or solid-state disk interface to one or more hard disks and/or solid state disks. In general, the data storage interface 120 may be an example of an input interface as described elsewhere in this specification. The data storage interface, however, may also take alternative forms, such as a network interface to a Local Area Network (LAN) or a Wide Area Network (WAN).

The processor system 100 is further shown to comprise a processing subsystem 140 configured to internally communicate with the data storage interface 120 via data communication 142, with a memory 160 via data communication 144 and with a user interface subsystem 180 via data communication 146. The memory 160 may for example be a volatile memory in which a computer program may be loaded which may cause the processing subsystem 140 to carry out functions which are described in this specification as being performed by the processing subsystem, or in general, by the processor system.

The user interface subsystem 180 may be configured to, during operation of the processor system 100, enable a user to interact with the processor system 100, for example using a graphical user interface, to control and obtain results from the simulation. For that and other purposes, the user interface subsystem 180 is shown to comprise a user input interface 184 configured to receive user input data 82 from a user input device 80 operable by the user. The user input device 80 may take various forms, including but not limited to a computer mouse, touch screen, keyboard, microphone, etc. Fig. 1 shows the user input device to be a computer mouse 80. In general, the user input interface 184 may be of a type which corresponds to the type of user input device 80, i.e., it may be a thereto corresponding type of user device interface. The user interface subsystem 180 is further shown to comprise a display output interface 182 configured to provide display data 62 to a display 60 to visualize output of the processor system 100. In the example of Fig. 1, the display is an external display 60. Alternatively, the display may be an internal display.

As also described with reference to Fig. 2 et seq., the processing subsystem 140 may be configured to, during operation of the processor system, access floorplan data and system data as described elsewhere in this specification, and simulate a use of the location system to locate one or more assets in the building, wherein the simulating comprises, for at least one simulated location of the asset and at least one simulated location of the user in the building and based on the locations of the building components in the building and the floorplan data, estimating a time spent or distance covered by the user to retrieve the asset. These and other operations of the processor system 100, and various optional aspects thereof, will be explained in more detail with reference to Fig. 2 et seq.

In general, the processor system 100 may be embodied as, or in, a single device or apparatus. The device or apparatus may be a general-purpose device or apparatus, such as a workstation or a computer, but may also be application-specific, such as a patient monitor. The device or apparatus may comprise one or more microprocessors which may represent the processing subsystem, and which may which execute appropriate software. The software may have been downloaded and/or stored in a corresponding memory, e.g., a volatile memory such as RAM or a non-volatile memory such as Flash. Alternatively, the functional units of the processor system, e.g., the input interface, the user interface subsystem, and the processing subsystem, may be implemented in the device or apparatus in the form of programmable logic, e.g., as a Field-Programmable Gate Array (FPGA). In general, each functional unit of the processor system 100 may be implemented in the form of a circuit. It is noted that the processor system 100 may also be implemented in a distributed manner, e.g., involving different devices or apparatuses, e.g., by cloud servers. For example, the distribution may be in accordance with a client-server model, e.g., using a server and workstation. For example, the user input interface and the display output interface may be part of the workstation, while the processing subsystem may be a subsystem of the server. It is noted that various other distributions are equally conceivable.

**Fig. 2** shows a floorplan 200 of a part of a building, showing several rooms 210 which are connected by a corridor 220. In this and following examples, the building is a hospital and the floorplan shows rooms and corridors within the hospital, for example the rooms and corridors on a particular floor or in a particular ward. However, this is not a limitation, in that the simulation may also be applied to any other type of building and retrieval of assets within the building, such as a warehouse, factory, office building, commercial store, etc. The floorplan may pertain to only a part of the building, e.g., the aforementioned floor or ward, but may alternatively pertain to the entire building.

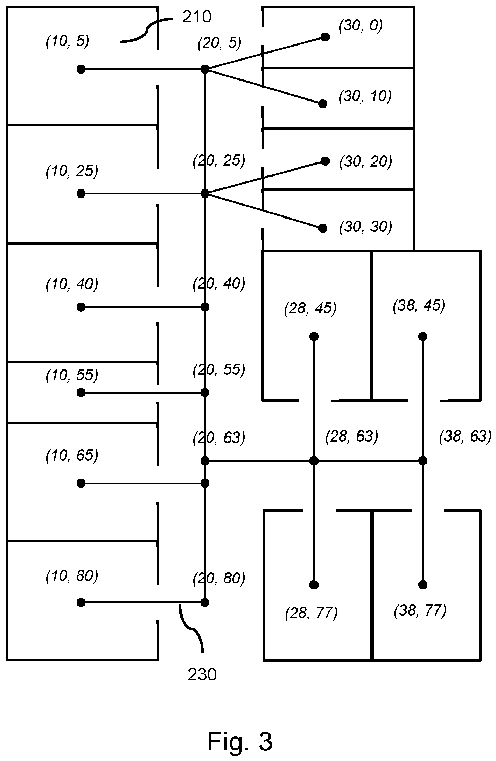

The floorplan 200 may be accessible to the system 100 in a computer-readable format. In particular, the floorplan 200 may be represented by floorplan data which allows the system 100 to determine distances and/or time spent walking between rooms. For example, as also shown in Fig. 3, the floorplan 200 of Fig. 2 may be represented by a graph 230 which represents the relative locations of rooms and corridors in the part of the building. Such a graph 230 may for example be generated based on the coordinates of rooms within the building. For example, a room may be represented in the graph 230 by a node which is labelled with a coordinate representing the location of the room, e.g., coordinate (10,5) for room 210 denoting a x-coordinate of '10' (e.g., defined in meters or in a coordinate system associated with the floorplan) and a y-coordinate of '5'. This coordinate may for example be derived from the floorplan, for example from the centre of a room, the door of the room, etc. The corridor may be defined by several nodes, with each node representing a point in the corridor at which one or more rooms may be accessed. This way, distances and/or walking times between rooms may be calculated by traversing within the graph from the node representing the source room to the node representing the target room while accruing the absolute differences in coordinates between consecutive nodes. Alternatively to the labelling of the nodes, or additionally, the edges between respective pairs of nodes may be labelled with distances or walking times between the rooms or corridors represented by the pairs of nodes. This way, distances and/or walking times between rooms may be determined by accruing the distances and/or walking times on the path from source room to target room.

With continued reference to Fig. 3, the graph 230 or similar representation of the floorplan of the building may be obtained by conversion from a human-readable version of the floorplan, for example using a computer vision software library. Such conversion may for example comprising placing a symbol manually on the intended location of a node. The computer vision library may then be used to determine the coordinates of the node relative to the floorplan. The edge length may be used to compute the distance between two rooms. The distance formula between two points may be applied to find the length distance, e.g., (x,y)=• ((x2-x1)²+(y2-y1)² where x=(x1,x2) and y=(y1,y2) are two connected nodes. The coordinates from the floorplan may for example be obtained in pixels. The distance in pixels may then be transformed to distance in meters. In a specific example, 64.5 pixels from the floorplan may correspond to 1 meter in real life. The distance may be transformed to walking time, for example using a formula which expresses walking time as a function of distance divided by speed. For a typical person, the default speed may be selected to be 1.4 m/sec.

The computer-readable version of the floorplan may be used by the system 100 of Fig. 1 to estimate search time(s) of a user for asset(s) within the building. In the simulation, the user may make use of a location system, which in the following is also referred to as a real-time location system, or in short, RTLS. Such use of the RTLS may for example involve simulating an operation of the RTLS and the user having access to an output of the RTLS. This output of the RTLS may comprise estimates of asset locations which are estimated by the RTLS. The characteristics of the RTLS may also be simulated by the system 100 of Fig. 1. These characteristics may vary depending on the type of RTLS, and in particular, on the technology used by the RTLS for localizing assets within the building. For example, a RTLS based on Wi-Fi may only provide an approximate asset location, e.g., the RTLS may indicate multiple adjacent rooms as potential locations of the asset, while a RTLS based on infrared technology may indicate the exact room. These differences, or in general, the respective characteristics of a particular RTLS, may be taken into account in the simulation as they may affect the user's search time. For that purpose, the simulation may make use of system data which may be indicative of a type and a configuration of the RTLS. For example, the system data may define the location of the building components of the RTLS in the building, e.g., the location of access points for a Wi-Fi-based RTLS and the locations of infrared detectors for an infrared-based RTLS.

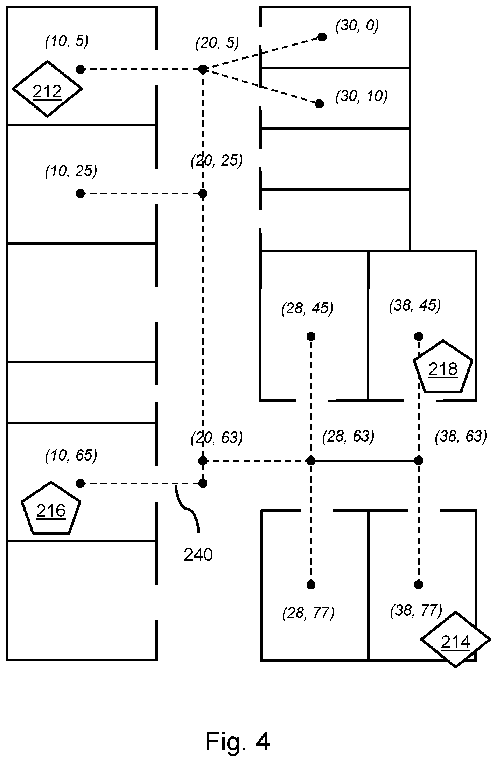

**Fig. 4** shows a simulated search path 240 of a user when starting in a source room 212 and searching for an asset which is located in a target room 214, wherein the search path is simulated for a baseline scenario in which a location system is not used or unavailable. Such a baseline scenario may thus involve a user, such as a healthcare professional, searching for an asset but not knowing the asset's location. The user may be simulated to start searching at the source room 212 and then deciding which room to visit next at each step of the search path. The user may for example decide which room to visit next based on a trade-off between distance to a particular unvisited room and the expectancy that the room contains the asset. This trade-off may be defined as a ratio being the expectancy to find an asset in the room divided by the distance to the room. The expectancy may for example be defined as a floating point number in the range of 0.0 to 1.0, with an expectancy of 0.0 indicating that the user is certain that the room does not contain the asset and an expectancy of 1.0 indicating that the user is certain that the room contains the asset. As is also described elsewhere in this specification, the expectancy may for example be dependent on the type of room. In this ratio, the distance to an unvisited room may be computed from the graph representation of the floorplan as described elsewhere in this specification, for example by summing the lengths of all edges that are part of the search path. The ratio may be computed for each room that is reachable from the current room, and the room that has the highest ratio may be stimulated to be visited next by the user. This baseline scenario may be simulated to obtain a quantification, e.g., a metric, for the search efficacy in this baseline scenario. An example of a quantification is the average search time or distance which may be obtained by simulating searches for different pairs of source room and target room and then averaging the simulation outputs, e.g., the search times to obtain an average search time or the search distances to obtain an average search distance. In the specific example of Fig. 4, the user is shown to start in the source room 212 and then to exit the source room 212 into the corridor, from where two opposite rooms and an adjacent room are visited, then continuing down the corridor where storage rooms 216, 218 are visited before finally visiting and finding the asset in the target room 214.

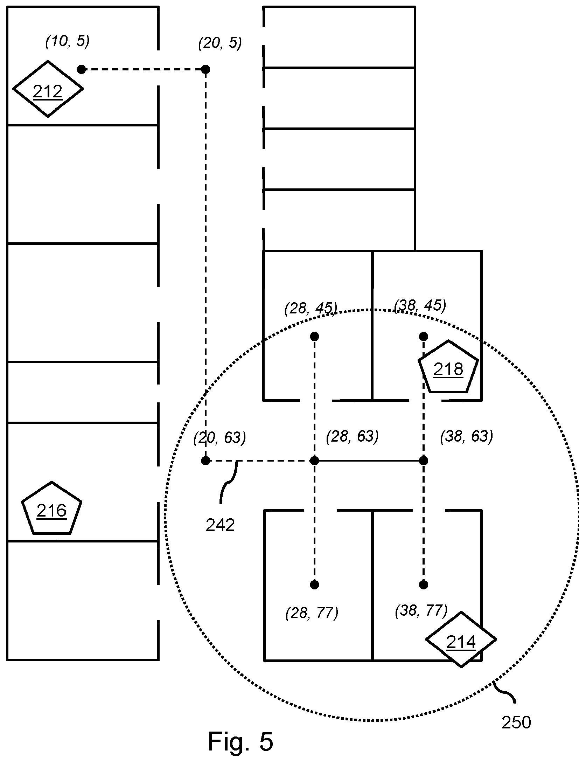

**Fig. 5** shows a simulated search path 242 for the user when making use of a RTLS which is based on triangulation of Wi-Fi access points. It can be seen that the search path 242 of the user involves the user directly proceeding towards the general location of the target room 214 as the RTLS may provide an estimated location of the asset to the user. This estimated location may include several rooms due to the limited accuracy of a Wi-Fi based RTLS. For example, the RTLS may indicate the four rooms in the circle 250 to the user. The user may visit the rooms until finding the asset. In the specific example of Fig. 5, the user is shown to find the asset in the last visited room, being the target room 214.

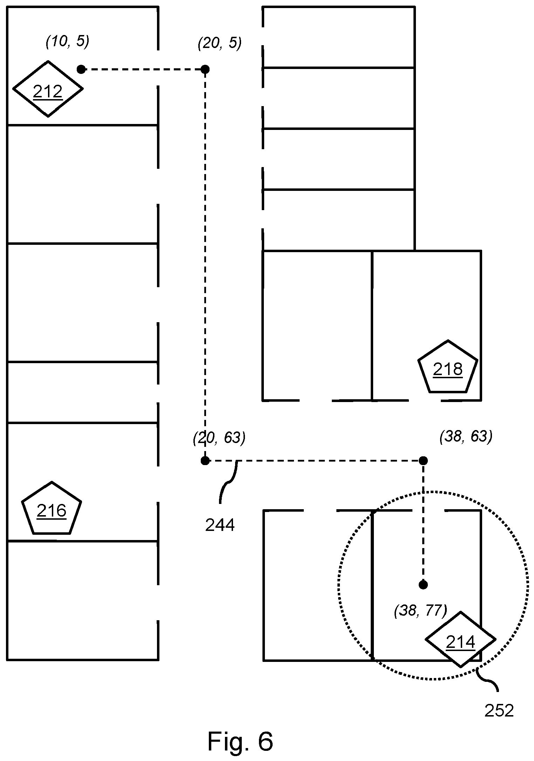

**Fig. 6** shows a simulated search path 244 for the user when making use of a RTLS which is based on infrared detectors installed in each room. In such an example, the RTLS may indicate only one room to the user, namely the room in which the asset has been detected. This detection is shown symbolically in Fig. 6 by a circle 252. The user may thus take the shortest path 244 to the target room 214. Such a shortest path may for example be computed by applying the Dijkstra algorithm to the graph-representation of the floor plan.

With continued reference to Figs. 5 and 6, for both types of RTLS, a search quantification may be obtained, for example as an average search time or search distance. This may, for a particular ward of a hospital, result in the following estimates of average search time (in seconds) and average search distance (in meters):

| Scenario | Average search time | Average search distance |
|---|---|---|
| 1. Without RTLS (Fig. 4) | 658.43 s | 165.8 m |
| 2. With Wi-Fi RTLS (Fig. 5) | 254.26 s | 103.96 m |
| 3. With IR RTLS (Fig. 6) | 118.61 s | 82.05 m |

In general, in the simulation, a search behaviour of the user may be simulated based on a model which expresses a degree of expectancy of the user of finding the asset in a respective room of the building. This modelling of search behaviour may be different for different types of users. For example, in the hospital, a nurse may search for an asset based on the aforementioned ratio between the expectancy to find an asset in the room divided by the distance to the room. This ratio may thus represent an example of the aforementioned modelling of the search behaviour. However, unlike the nurse, a biomedical engineer may have a list of the last locations of an asset, which locations are often, but not always, correct. The biomedical engineer may thus search for an asset by visiting the last known location of the asset as noted on the list, and if the asset is not there, continuing his/her search in a same manner as the nurse. It will be appreciated that various other aspects of the search behaviour may be simulated as well. For example, a time spent in each room to search for the asset may be simulated. Such a time spent may be adjustable, e.g., as a parameter in the simulation.

In general, in the simulation, various parameters may be adjustable. For example, the walking speed, which may be used by the simulation to convert between distance and walking time, may be adjustable. A default value of the walking speed may for example be 1.4 m/sec. Another example is that the search time per room may be adjustable. A default value of the search time per room may for example be 60 sec. Yet another example is that the accuracy of the Wi-Fi triangulation may be adjustable, for example by a parameter defining a radius representing the approximate location of the asset after triangulation. A default value of the radius may for example be 10 m. Moreover, the expectancy of a user to find an asset in a room may be adjustable in the simulation, and may in some examples be dependent on the type of room. For example, in a hospital, there may be a higher expectancy to find assets in a storage room than in a patient room. Accordingly, the expectancy to find the asset a storage room and patient room may be separately adjustable. A default value of the expectancy for example may be 0.7 for a storage room and 0.3 for a patient room. Here, the respective numbers may be understood as the probability that the room contains the asset as per the user's expectation.

In some example, a real-life configuration of the RTLS may be adjusted based on an output of the simulation. Such an adjustment may for example involve adjusting a location of one or more of the building components of the RTLS, for example by moving a Wi-Fi access point or an infrared detector. Another example is that the density of the building components in the building may be adjusted based on the output of the simulation, for example by increasing or decreasing the density of the building components. Such adjustments may be carried out after a simulation in which the location system is simulated in its current, non-adjusted configuration and in an adjusted configuration. The current configuration may be used as a baseline scenario for comparison to the adjusted configuration. The real-life configuration of the RTLS may then be adjusted based on a result of the comparison, for example if the efficacy of the of the location system with the adjusted configuration is better than the efficacy of the location system without the adjusted configuration, or if the degradation is limited in view of a reduction in complexity or cost.

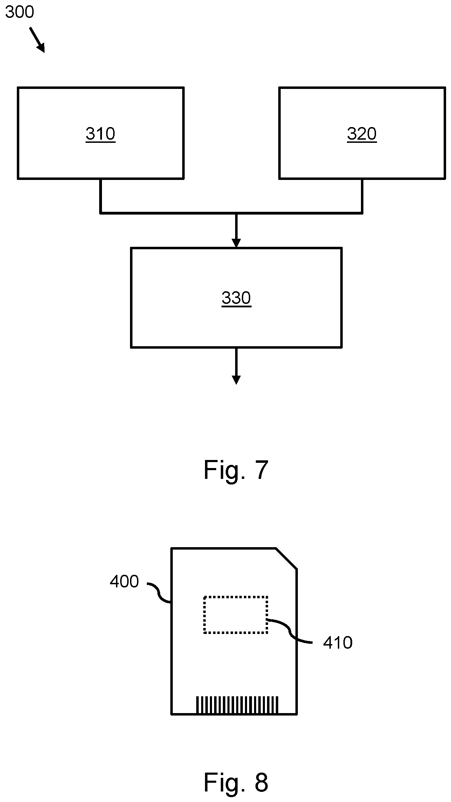

**Fig. 7** shows a block-diagram of computer-implemented method 300 for determining an efficacy of a location system in terms of its ability to assist a user to retrieve an asset in a building. The method 300 may correspond to an operation of the processor system 100 of Fig. 1. However, this is not a limitation, in that the computer-implemented method 300 may also be performed using another system, apparatus or device. The method 300 is shown to comprise, in an operation titled "ACCESSING FLOORPLAN DATA", accessing 310 floorplan data as described elsewhere in this specification, and in an operation titled "ACCESSING SYSTEM DATA", accessing 320 system data 320 as described elsewhere in this specification. The method 300 is further shown to comprise, in an operation titled "SIMULATING LOCATION SYSTEM", simulating 330 a use of the location system to locate one or more assets in the building, wherein the simulating comprises, for at least one simulated location of the asset and at least one simulated location of the user in the building and based on the locations of the building components in the building and the floorplan data, estimating a time spent or distance covered by the user to retrieve the asset. It will be appreciated that in general, operations of method 300 of Fig. 7 may be performed in any suitable order, e.g., consecutively, simultaneously, or a combination thereof, subject to, where applicable, a particular order being necessitated, e.g., by input/output relations. Operations may also be performed as part of other operations.

The method may be implemented on a computer as a computer implemented method, as dedicated hardware, or as a combination of both. As also illustrated in **Fig. 8**, instructions for the computer, e.g., executable code, may be stored on a transitory computer readable medium or on a non-transitory computer readable medium 400, e.g., in the form of a series 410 of machine-readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 8 shows a memory device 400.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method (300) for determining an efficacy of a location system for assisting a user to retrieve an asset in a building, wherein the location system comprises an asset component which is provided with the asset and a plurality of building components which are provided at known locations in the building, wherein the asset is localizable based on the asset component being in communication range of one or more of the building components, wherein the location system comprises a user interface for enabling the user to obtain an estimated location of the asset, wherein the method comprises:
- accessing (310) floorplan data, wherein the floorplan data is indicative of relative locations of rooms (210) and corridors (220) in the building;
- accessing (320) system data, wherein the system data is indicative of a type and a configuration of the location system, wherein the configuration indicated by the system data includes at least the locations of the building components in the building;
- simulating (330) a use of the location system to locate one or more assets in the building, wherein the simulating comprises, for at least one simulated location of the asset and at least one simulated location of the user in the building and based on the locations of the building components in the building and the floorplan data, estimating a time spent or distance covered by the user to retrieve the asset.

2. The method (300) according to claim 1, wherein the location system is configured to, during use, indicate a room which has a probability of containing the asset to the user, and wherein the simulating of the use of the location system further comprises, if the room indicated by the location system in the simulation does not contain the asset, simulating a search behaviour of the user to find the asset in a neighbourhood of said indicated room, wherein the simulating of the search behaviour is based on a model which expresses a degree of expectancy of the user of finding the asset in a respective room of the building.

3. The method (300) according to claim 1 or 2, wherein the location system is configured to, during use, if several rooms have a probability of containing the asset, indicate the rooms to the user, and wherein the simulating of the use of the location system further comprises simulating an order in which the user visits the rooms to find the asset.

4. The method (300) according to any one of claims 1 to 3, further comprising accessing further system data of a further location system which is of a different type than the location system, and wherein the method further comprises simulating the use of the further location system to locate the one or more assets in the building, and outputting efficacy data enabling a comparison between the efficacy of the location system and the efficacy of the further location system for assisting the user in locating the one or more assets in the building.

5. The method (300) according to claim 4, wherein the location system and the further location system are based on different communication techniques selected from a group of: Wi-Fi, Bluetooth LE, Li-Fi, and infrared.

6. The method (300) according to any one of claims 1 to 5, further comprising simulating the efficacy of the user in locating one or more assets in the building without the use of the location system, comprising simulating a search behaviour of the user based on a model which expresses a degree of expectancy of the user of finding the asset in a respective room of the building.

7. The method (300) according to claim 6, wherein the model expresses the degree of expectancy of the user of finding the asset in a respective room based on a type of room.

8. The method (300) according to claim 7, wherein the type of room is indicative of whether or not a respective room is designated as storage for assets, and wherein the model expresses a higher expectancy of the user to find the asset in a room which is designated as storage for assets than a room which is not designated as storage for assets.

9. The method (300) according to any one of claims 1 to 8, wherein the floorplan data comprises a data structure representing a labelled graph, wherein nodes of the graph represent rooms or corridors of the building, and wherein:
- the nodes are labelled with respective locations of the rooms or corridors, and/or
- edges between respective pairs of nodes are labelled with distances or walking times between the rooms or corridors represented by the respective pairs of nodes.

10. The method (300) according to any one of claims 1 to 9, further comprising estimating a time spent in a respective room in a search of the user to retrieve the asset.

11. A method comprising:
- performing the method (300) according to any one of claims 1 to 10 to obtain an output of the simulation for a location system; and
- adjusting a real-life configuration of the location system based on the output of the simulation.

12. The method according to claim 11, wherein the adjusting of the real-life configuration of the location system comprises at least one of: adjusting a location of one or more of the building components and adjusting a density of the building components in the building.

13. The method according to claim 11 or 12, further comprising, before adjusting the real-life configuration of the location system:
- simulating an adjusted configuration of the location system;
- comparing the efficacy of the location system with and without the adjusted configuration; and
- adjusting the real-life configuration of the location system based on a result of said comparison.

14. A method comprising:
- performing the method (300) according to any one of claims 1 to 10 to obtain an output of the simulation for a location system;
- performing the method (300) according to any one of claims 1 to 10 to simulate use of a further location system or to simulate a user locating one or more assets in the building without the use of a location system;
- comparing the efficacy of the location system to the efficacy of the further location system or the efficacy of the user when not using a location system; and
- selecting and installing one of the location system and the further location system in a real-life version of the building based on a result of said comparison.

15. A transitory or non-transitory computer-readable medium (400) comprising data (410) representing a computer program, the computer program comprising instructions for causing a processor system to perform the method according to any one of claims 1 to 10.

16. A processor system (100) for determining an efficacy of a location system for assisting a user to retrieve an asset in a building, wherein the location system comprises an asset component which is provided with the asset and a plurality of building components which are provided at known locations in the building, wherein the asset is localizable based on the asset component being in communication range of one or more of the building components, wherein the location system comprises a user interface for enabling the user to obtain an estimated location of the asset, wherein the processor system comprises:
- an input interface (120) for accessing:
- floorplan data (40), wherein the floorplan data is indicative of relative locations of rooms and corridors in the building; and
- system data (42), wherein the system data is indicative of a type and a configuration of the location system, wherein the configuration indicated by the system data includes at least the locations of the building components in the building;
- a processing subsystem (140) for simulating a use of the location system to locate one or more assets in the building, wherein the simulating comprises, for at least one simulated location of the asset and at least one simulated location of the user in the building and based on the locations of the building components in the building and the floorplan data, estimating a time spent or distance covered by the user to retrieve the asset.
